# EUROPEAN PATENT APPLICATION

(11) **EP 2 874 150 A1**
(43) Date of publication of application: **20.05.2015**
(21) Application number: 14190917.6
(22) Date of filing: 29.10.2014
(51) Int. Cl.: G10L 25/66

(54) **Voice-based health monitor including a vocal energy level monitor**

(30) Priority: 19.11.2013 US 201361906282 P; 28.10.2014 US 201414525274
(71) Applicant: Hand Held Products, Inc., Fort Mill, SC 29707 (US)
(72) Inventor: Kumar, Sanjay, Morristown, NJ New Jersey 07962-2245 (US)
(74) Representative: Houghton, Mark Phillip

(57) **Abstract**

A system is described that captures voice samples from a subject and determines a relative energy level of the subject from the captured voice samples. A baseline energy level for the subject is initially determined during a system training session when the subject is in a good state of health and vocalizes words or phrases for analysis by the system. Subsequently, voice samples are taken of the subject, e.g. during a work shift, to monitor the subject's fatigue levels to determine whether the subject is capable of continuing his work assignment safely, or whether the subject and the subject's work product needs to be more closely monitored. In a different application, voice samples of a subject can be taken regularly during telephone conversations, and the corresponding energy level of the subject obtained from the voice samples can be used as a general health indicator.

## Description

### CROSS-REFERENCE TO RFLATED APPLICATION

The present application claims the benefit of U.S. Patent Application No. 61/906,282 for a *VOICE-BASED HEALTH MONITOR, SUCH AS A VOCAL ENERGY LEVEL MONITOR THAT COMPARES A SUBJECT'S ENERGY LEVELS TO A BASELINE ENERGY LEVEL* filed November 19, 2013. The foregoing patent application is hereby incorporated by reference in its entirety.

### BACKGROUND

When a person is under stress, micro-tremors occur in the muscles of the vocal tract, and the micro-tremors are transmitted through the person's speech. The micro-tremors occur at approximately 8-12 Hz. Voice-based lie detection is based on measurements of micro tremors in a subject's voice in this frequency range.

### BRIFF DESCRIPTION OF THE DRAWINGS

Examples of a voice-based health monitor are illustrated in the figures. The examples and figures are illustrative rather than limiting.
FIG. 1 shows an example system where one or more subjects interact via an audio receiver with a voice monitor.
FIG. 2 shows a block diagram of a voice monitor.
FIGS. 3A-3B show a flow chart illustrating an example of a method of capturing voice samples to determine an energy level of a subject.
FIG. 4 shows an example system that monitors a patient's voice energy levels.
FIG. 5 shows a flow chart illustrating an example of monitoring a patient's energy levels.
FIG. 6 is a block diagram of a basic and suitable computer that may employ aspects of the invention.
FIG. 7 is a block diagram illustrating a simple, yet suitable system in which aspects of the invention may operate in a networked computer environment.

### SUMMARY

A system is described that captures voice samples from a subject and determines a relative energy level of the subject from the captured voice samples. A baseline energy level for the subject is initially determined during a system training session when the subject is in a good state of health and vocalizes words or phrases for analysis by the system. Subsequently, voice samples are taken of the subject, e.g. during a work shift, to monitor the subject's fatigue levels to determine whether the subject is capable of continuing his work assignment safely, or whether the subject and the subject's work product needs to be more closely monitored. In a different application, voice samples of a subject can be taken regularly during telephone conversations, and the corresponding energy level of the subject obtained from the voice samples can be used as a general health indicator.

### DETAILED DESCRIPTION

Various aspects and examples of the invention will now be described. The following description provides specific details for a thorough understanding and enabling description of these examples. One skilled in the art will understand, however, that the invention may be practiced without many of these details. Additionally, some well-known structures or functions may not be shown or described in detail, so as to avoid unnecessarily obscuring the relevant description.

The terminology used in the description presented below is intended to be interpreted in its broadest reasonable manner, even though it is being used in conjunction with a detailed description of certain specific examples of the technology. Certain terms may even be emphasized below; however, any terminology intended to be interpreted in any restricted manner will be overtly and specifically defined as such in this Detailed Description section.

Voice-based lie detection equipment has been developed based on the measurement of micro tremors in the range of 8-12 Hz in a person's voice. Micro-tremors in the 8-10 Hz range is considered normal, while micro tremors in the 10-12 Hz range is an indication that a person is stressed. The presence of stress indicators in a person's voice can be an early sign of health problems. One application where vocal stress indicators can be used effectively is for monitoring fatigue levels of workers during a work shift. For example, a person's voice energy levels can drop when the person becomes tired while performing routine work or routine activities, thus resulting in the worker making more errors and potentially performing duties in an unsafe manner.

### WORKER FATIGUE AND STRESS MONITORING

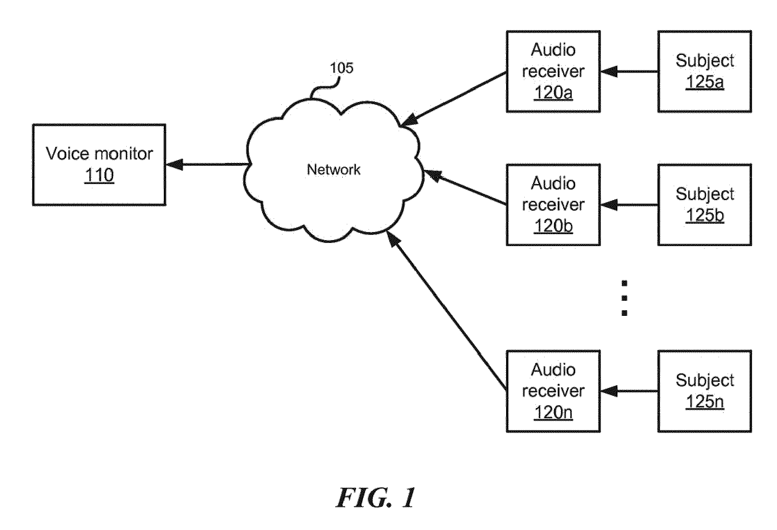

FIG. 1 shows an example system where one or more subjects 125 interact via an audio receiver 120 with a voice monitor 110. Voice samples of subjects 125a, 125b, ... 125n are captured using respective audio receivers 120a, 120b, ... 120n. The voice samples are then sent via a network 105 for processing by the voice monitor 110. In some instances, one or more audio receivers 120 can be directly coupled to the voice monitor 110, such that the captured voice samples are directly sent to the voice monitor 110 without using the network 105. Note that the audio receivers may form part of another device, such as a wireless telecommunications device (e.g. cellular phone, as noted below), automated data collection device (e.g. bar code/RFID reader), laptop computer, tablet computer, etc.

In one example scenario, workers in a voice-enabled warehouse pick warehoused products to fulfill orders. Each of the workers is individually directed by a computer or central server to a specific warehouse location, and the worker responds by speaking a series of check digits to confirm that the workers is at the correct bin location. A voice-enabled computer verifies the check digits, and directs the worker to pick a specified quantity. The worker then verbally confirms that the step has been completed. Thus, the worker regularly speaks as part of the worker's duties, and the worker's vocalizations can be sent to the voice monitor for monitoring the energy level of the worker to obtain an indication of the worker's fatigue level.

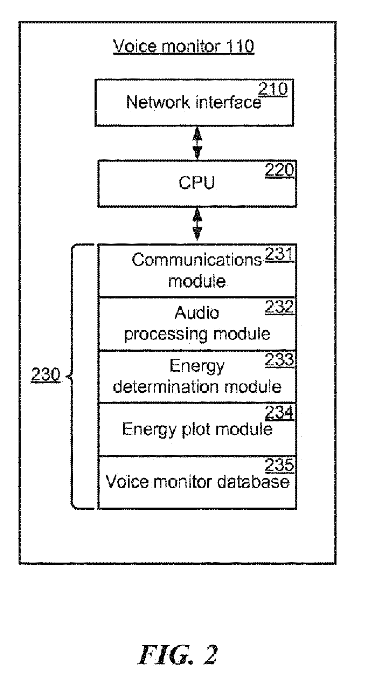

FIG. 2 shows a block diagram illustrating an example of components in the voice monitor 110 that receives a subject's voice samples and processes the voice samples to determine relative energy levels of the subject. The voice monitor 110 includes conventional computer components, including a CPU (central processing unit) 220 coupled to a network interface 210 and a memory 230. The memory 230 stores several computer programs including a communications module 231 configured to establish network communications via the network interface 210. The memory 230 also stores an audio processing module 232, an energy determination module 233, and an energy plot module 234. The modules 232, 233, and 234 operate in conjunction with a voice monitor database 235. The voice monitor database 235 can be implemented as, for example, a relational database. In some instances, the voice monitor database 235 can be external to the voice monitor 110. Additional or fewer components can be included in the voice monitor 110.

In the example of FIG. 2, the audio processing module 232 receives, via the network interface 210, voice samples captured by the audio receiver 120. The audio processing module 232 is configured to process the captured voice samples. The audio processing module 232 can perform, but is not limited to performing, any of the following steps: digitizing the captured voice samples, frequency filtering the voice samples to filter out data outside the frequency range or ranges of interest, and amplifying or reducing the loudness level of the voice samples.

In the example of FIG. 2, the energy determination module 233 determines an energy level of a subject based upon a voice sample. The energy determination module 233 measures the sound energy of the voice sample. For example, the energy determination module 233 can integrate the voice sample processed by the audio processing module 232 to obtain the subject's voice energy level and store the data in the voice monitor database 235. Additionally, the obtained energy level can be normalized by the energy determination module 233 for comparison with other voice energy levels. For voice samples obtained during an initial system training session, the average obtained energy level can be stored in the voice monitor database 235.

For current voice samples, the energy determination module 233 retrieves the baseline energy level for a particular subject from the voice monitor database 235 and compares it to the current energy level. A predetermined threshold level is used by the energy determination module 233 to identify whether the energy level of the subject has dropped below a critical level. For example, if the predetermined threshold level is 40%, and the energy level of a subject is determined to drop more than 40% of the baseline energy level for the subject, the administrator can be notified of the subject's low energy levels. Data obtained and stored by the voice monitor 110 in the voice monitor database 235 can also be used to determine the appropriate threshold level to use for given work environments.

Low energy levels corresponding to an increase in fatigue and stress can impact the subject's ability to perform assigned duties. In the scenario of a work shift, the worker may be more likely to work in an unsafe manner and/or to commit errors, thus requiring a higher level of monitoring of the worker and the worker's work product. Alternatively, if a worker is determined to be fatigued and stressed, the worker can be given job duties that are less stressful.

In the example of FIG. 2, the energy plot module 234 is configured to provide a running plot of a subject's determined energy level. Normalized plots for multiple subjects can be plotted together as an incentive to motivate subjects to maintain a targeted energy level during a work shift in a friendly competitive game environment.

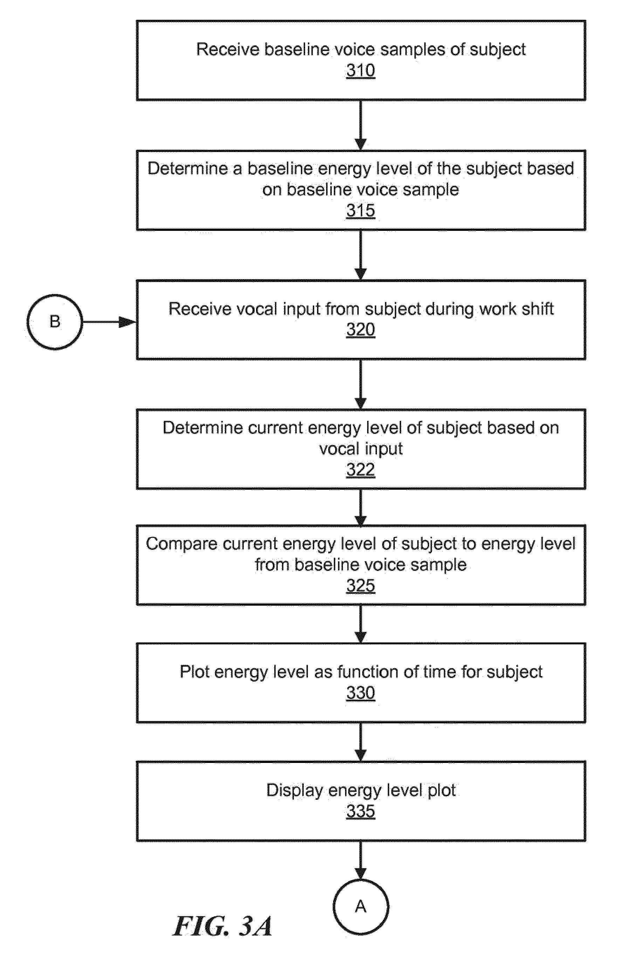

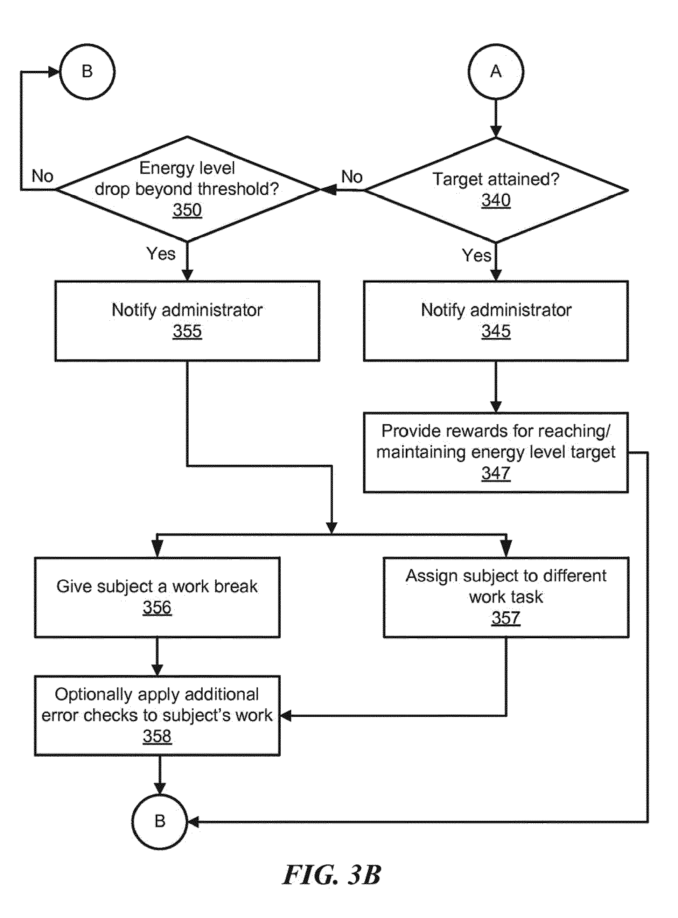

FIGS. 3A-3B show a flow chart illustrating an example of a method of capturing voice samples to determine an energy level of a subject. At block 310, one or more baseline voice samples of a subject are received by the voice monitor. The baseline voice samples should be obtained when the subject is in good general health and not in a fatigued state. In some instances, the subject can be prompted to speak certain words or phrases. Alternatively or additionally, the subject can select the words or phrases to be spoken for the baseline voice samples. These baseline voice samples are used during an initial system training session to determine at block 315 a baseline energy level for the subject based on the subject's voice samples.

Then at block 320, vocal input is received by the voice monitor from the subject during the subject's work shift. In some instances, the subject may speak as a normal part of the subject's duties. However, the subject can be prompted to provide voice samples even if it is not part of the subject's work duties. At block 322, the voice monitor determines the current energy level of the subject based on the received vocal input, and at block 325, the voice monitor compares the current energy level of the subject to the baseline energy level of the subject.

Next, at block 330, the voice monitor may plot the energy level of the subject as a function of time, and at block 335, the energy level plot may be displayed so that the subject can see it and/or a managerial administrator can see it. By providing this feedback to the subject, he or she can be motivated to maintain a target energy level throughout a work shift. The administrator can also monitor the stress level of the workers through the energy level plots to determine whether a particular worker needs to be reassigned to a less stressful or dangerous task, should take a break/vacation, should take stress reduction classes, or take other remedial action.

Next, at decision block 340, the voice monitor determines whether a target energy level has been maintained by the subject for a given period of time. For example, the voice monitor can determine whether the subject has maintained an energy level of at least 75% of the subject's baseline energy level. If the target energy level has been attained (block 340 - Yes), the administrator of the work shift is notified, and at block 347, the administrator can provide a reward to the subject for reaching the target energy level goal. By providing rewards, the subject is incentivized to work towards maintaining targeted energy levels. Further, the use of incentives and gamification techniques within a work environment can also boost worker morale. The process then returns to block 320.

If the target energy level has not been attained (block 340 - No), at decision block 350, the voice monitor determines whether the energy level of the subject has dropped beyond a predetermined threshold. If the subject's energy level has not dropped beyond the threshold level (block 350 - No), the process returns to block 320. If the subject's energy level has dropped beyond the threshold (block 350 - Yes), at block 355 the administrator is notified.

Then the administrator can either give the subject a work break at block 356 or assign the subject to a different work task at block 357, where the different work task is less laborious, less stressful, and/or requires less focus. In either case, at block 358 additional error checks can optionally be applied to the subject's work to ensure that the work is being performed correctly and additional monitoring of the subject can be performed to ensure that the subject is acting in a safe manner. The process returns to block 320.

### PATIENT MONITORING

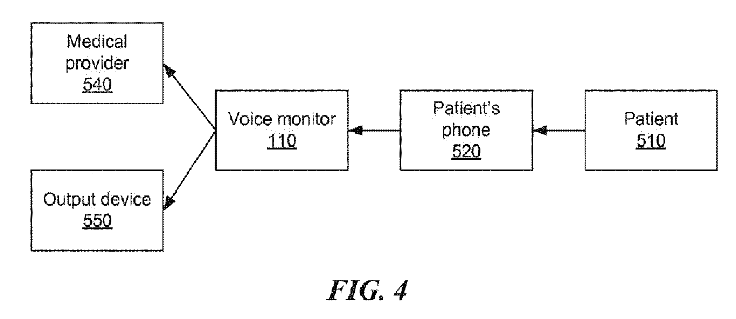

FIG. 4 shows an example system that monitors a patient's voice energy levels. A patient's voice energy level can be correlated with the patient's health. The patient 510 uses phone 520 in a typical manner. Installed in the phone 520 is an audio receiver agent that sends samples of the patient's voice to the voice monitor 110. In some instances, the phone 520 can be a smart phone that has a voice sample application installed on the phone, and the voice sample application sends voice samples to the voice monitor 110.

The voice monitor 110 is coupled to an output device 550 configured to provide feedback to the patient regarding determinations of the patient's health. For example, the output device 550 can be a display near the phone, or part of the phone in the case of a smartphone, that displays a reminder to the patient to see a medical provider or to take a rest when energy levels drop. Alternatively or additionally, the output 550 can be a speaker that verbally provides the reminder to the patient or provides a warning signal.

Additionally, the voice monitor 110 can be configured to directly notify a medical provider 540 if the patient's energy level is determined to have deteriorated to the point where the medical provider or medical attention is needed.

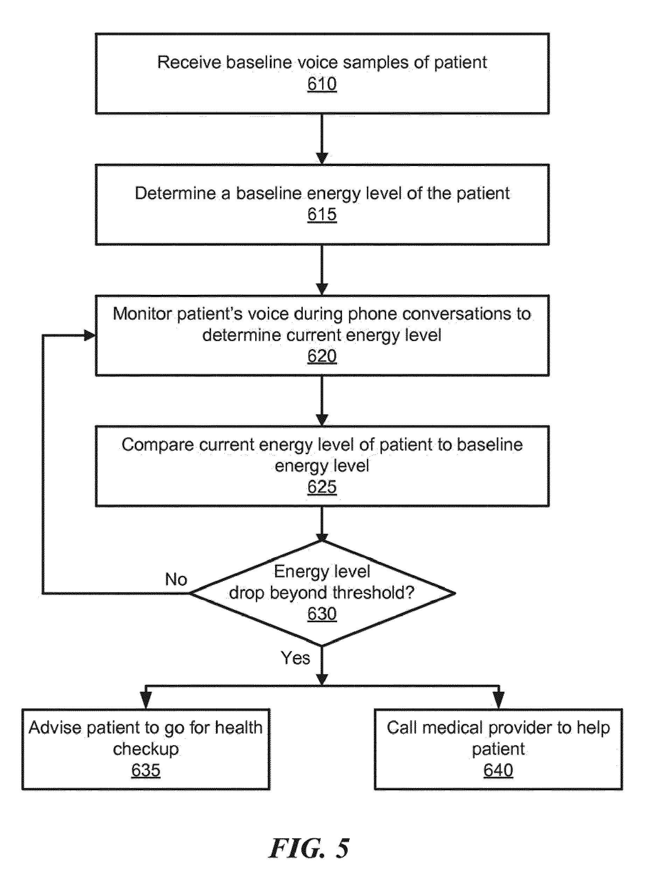

FIG. 5 shows a flow chart illustrating an example of monitoring a patient's energy levels. At block 610, one or more baseline voice samples of the patient are received by the voice monitor. The baseline voice samples should be obtained when the patient is in relatively good general health. Then at block 615, the voice monitor determines a baseline energy level of the patient.

Next, at block 620, the voice monitor determines the patient's energy level using voice samples of the patient during phone conversations to determine the patient's current energy level. And at block 625, the voice monitor compares the current energy level of the patient to the baseline energy level.

At decision block 630, the voice monitor determines whether the current energy level of the patient has dropped below a threshold level. If the energy level has not dropped below the threshold level (block 630 - No), the process returns to block 620. If the energy level of the patient has dropped below the threshold level (block 630 - Yes), at block 635 the voice monitor advises the patient to go for a health checkup. The voice monitor can also call a medical provider to help the patient at block 640.

Note that the audio processing of the voice monitor 110 may be performed on a server computer, while the audio input may be obtained by any computing client device discussed herein. Alternatively, some or all audio processing may be performed on the client device. In one example, all of the audio input and processing are performed on the client device, and the client device may provide some reporting back to a server computer.

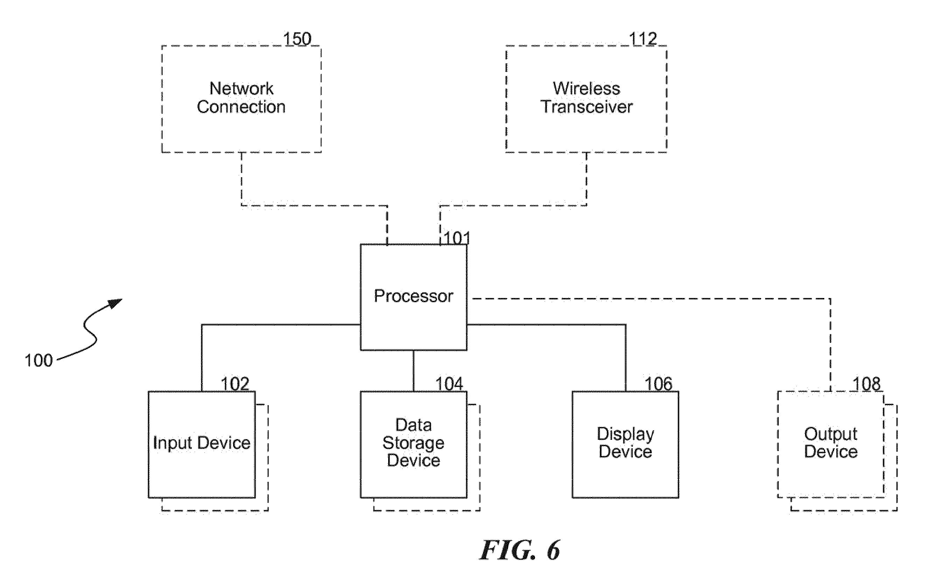

FIG. 6 and the following discussion provide a brief, general description of a suitable computing environment in which aspects of the invention can be implemented. Although not required, aspects and embodiments of the invention will be described in the general context of computer-executable instructions, such as routines executed by a general-purpose computer, e.g., a server or personal computer. Those skilled in the relevant art will appreciate that the invention can be practiced with other computer system configurations, including Internet appliances, hand-held devices, wearable computers, cellular or mobile phones, multi-processor systems, microprocessor-based or programmable consumer electronics, set-top boxes, network PCs, mini-computers, mainframe computers and the like. The invention can be embodied in a special purpose computer or data processor that is specifically programmed, configured, or constructed to perform one or more of the computer-executable instructions explained in detail below. Indeed, the term "computer" (and like terms), as used generally herein, refers to any of the above devices, as well as any data processor or any device capable of communicating with a network, including consumer electronic goods such as game devices, cameras, or other electronic devices having a processor and other components, e.g., network communication circuitry.

The invention can also be practiced in distributed computing environments, where tasks or modules are performed by remote processing devices, which are linked through a communications network, such as a Local Area Network ("LAN"), Wide Area Network ("WAN"), or the Internet. In a distributed computing environment, program modules or subroutines may be located in both local and remote memory storage devices. Aspects of the invention described below may be stored or distributed on computer-readable media, including magnetic and optically readable and removable computer discs, stored as in chips (e.g., EEPROM or flash memory chips). Alternatively, aspects of the invention may be distributed electronically over the Internet or over other networks (including wireless networks). Those skilled in the relevant art will recognize that portions of the invention may reside on a server computer, while corresponding portions reside on a client computer. Data structures and transmission of data particular to aspects of the invention are also encompassed within the scope of the invention.

Referring to FIG. 6, one embodiment of the invention employs a computer 100, such as a personal computer or workstation, having one or more processors 101 coupled to one or more user input devices 102 and data storage devices 104. The computer is also coupled to at least one output device such as a display device 106 and one or more optional additional output devices 108 (e.g., printer, plotter, speakers, tactile or olfactory output devices, etc.). The computer may be coupled to external computers, such as via an optional network connection 150, a wireless transceiver 112, or both.

The input devices 102 may include a keyboard and/or a pointing device such as a mouse. Other input devices are possible such as a microphone, joystick, pen, game pad, scanner, digital camera, video camera, and the like. The data storage devices 104 may include any type of computer-readable media that can store data accessible by the computer 100, such as magnetic hard and floppy disk drives, optical disk drives, magnetic cassettes, tape drives, flash memory cards, digital video disks (DVDs), Bernoulli cartridges, RAMs, ROMs, smart cards, etc. Indeed, any medium for storing or transmitting computer-readable instructions and data may be employed, including a connection port to or node on a network such as a local area network (LAN), wide area network (WAN) or the Internet (not shown in FIG. 6).

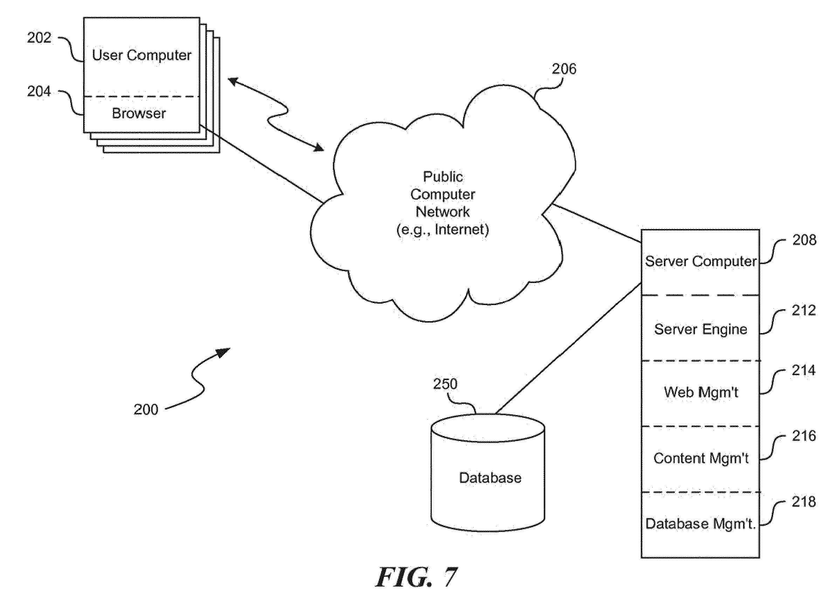

Aspects of the invention may be practiced in a variety of other computing environments. For example, referring to FIG. 7, a distributed computing environment with a web interface includes one or more user computers 202 in a system 200 are shown, each of which includes a browser program module 204 that permits the computer to access and exchange data with the Internet 206, including web sites within the World Wide Web portion of the Internet. The user computers may be substantially similar to the computer described above with respect to FIG. 6. User computers may include other program modules such as an operating system, one or more application programs (e.g., word processing or spread sheet applications), and the like. The computers may be general-purpose devices that can be programmed to run various types of applications, or they may be single-purpose devices optimized or limited to a particular function or class of functions. More importantly, while shown with web browsers, any application program for providing a graphical user interface to users may be employed, as described in detail below; the use of a web browser and web interface are only used as a familiar example here.

At least one server computer 208, coupled to the Internet or World Wide Web ("Web") 206, performs much or all of the functions for receiving, routing, and storing of electronic messages, such as web pages, audio signals, and electronic images. While the Internet is shown, a private network, such as an intranet may indeed be preferred in some applications. The network may have a client-server architecture, in which a computer is dedicated to serving other client computers, or it may have other architectures such as a peer-to-peer, in which one or more computers serve simultaneously as servers and clients. A database 250 or databases, coupled to the server computer(s), stores much of the web pages and content exchanged between the user computers. The server computer(s), including the database(s), may employ security measures to inhibit malicious attacks on the system and to preserve integrity of the messages and data stored therein (e.g., firewall systems, secure socket layers (SSL), password protection schemes, encryption, and the like).

The server computer 208 may include a server engine 212, a web page management component 214, a content management component 216, and a database management component 218. The server engine performs basic processing and operating system level tasks. The web page management component handles creation and display or routing of web pages. Users may access the server computer by means of a URL associated therewith. The content management component handles most of the functions in the embodiments described herein. The database management component includes storage and retrieval tasks with respect to the database, queries to the database, and storage of data.

Aspects of the invention may be stored or distributed on computer-readable media, including magnetically or optically readable computer discs, hard-wired or preprogrammed chips (e.g., EEPROM semiconductor chips), nanotechnology memory, biological memory, or other data storage media. Alternatively, computer implemented instructions, data structures, screen displays, and other data under aspects of the invention may be distributed over the Internet or over other networks (including wireless networks), on a propagated signal on a propagation medium (e.g., an electromagnetic wave(s), a sound wave, etc.) over a period of time, or they may be provided on any analog or digital network (packet switched, circuit switched, or other scheme). Those skilled in the relevant art will recognize that portions of the invention reside on a server computer, while corresponding portions reside on a client computer such as a mobile or portable device, and thus, while certain hardware platforms are described herein, aspects of the invention are equally applicable to nodes on a network.

### CONCLUSION

Unless the context clearly requires otherwise, throughout the description and the claims, the words "comprise," "comprising," and the like are to be construed in an inclusive sense (i.e., to say, in the sense of "including, but not limited to"), as opposed to an exclusive or exhaustive sense. As used herein, the terms "connected," "coupled," or any variant thereof means any connection or coupling, either direct or indirect, between two or more elements. Such a coupling or connection between the elements can be physical, logical, or a combination thereof. Additionally, the words "herein," "above," "below," and words of similar import, when used in this application, refer to this application as a whole and not to any particular portions of this application. Where the context permits, words in the above Detailed Description using the singular or plural number may also include the plural or singular number respectively. The word "or," in reference to a list of two or more items, covers all of the following interpretations of the word: any of the items in the list, all of the items in the list, and any combination of the items in the list.

The above Detailed Description of examples of the invention is not intended to be exhaustive or to limit the invention to the precise form disclosed above. While specific examples for the invention are described above for illustrative purposes, various equivalent modifications are possible within the scope of the invention, as those skilled in the relevant art will recognize. While processes or blocks are presented in a given order in this application, alternative implementations may perform routines having steps performed in a different order, or employ systems having blocks in a different order. Some processes or blocks may be deleted, moved, added, subdivided, combined, and/or modified to provide alternative or subcombinations. Also, while processes or blocks are at times shown as being performed in series, these processes or blocks may instead be performed or implemented in parallel, or may be performed at different times. Further any specific numbers noted herein are only examples. It is understood that alternative implementations may employ differing values or ranges.

The various illustrations and teachings provided herein can also be applied to systems other than the system described above. The elements and acts of the various examples described above can be combined to provide further implementations of the invention.

Any patents and applications and other references noted above, including any that may be listed in accompanying filing papers, are incorporated herein by reference. Aspects of the invention can be modified, if necessary, to employ the systems, functions, and concepts included in such references to provide further implementations of the invention.

These and other changes can be made to the invention in light of the above Detailed Description. While the above description describes certain examples of the invention, and describes the best mode contemplated, no matter how detailed the above appears in text, the invention can be practiced in many ways. Details of the system may vary considerably in its specific implementation, while still being encompassed by the invention disclosed herein. As noted above, particular terminology used when describing certain features or aspects of the invention should not be taken to imply that the terminology is being redefined herein to be restricted to any specific characteristics, features, or aspects of the invention with which that terminology is associated. In general, the terms used in the following claims should not be construed to limit the invention to the specific examples disclosed in the specification, unless the above Detailed Description section explicitly defines such terms. Accordingly, the actual scope of the invention encompasses not only the disclosed examples, but also all equivalent ways of practicing or implementing the invention under the claims.

While certain aspects of the invention are presented below in certain claim forms, the applicant contemplates the various aspects of the invention in any number of claim forms. For example, while only one aspect of the invention is recited as a means-plus-function claim under 35 U.S.C. § 112, sixth paragraph, other aspects may likewise be embodied as a means-plus-function claim, or in other forms, such as being embodied in a computer-readable medium. (Any claims intended to be treated under 35 U.S.C. § 112, ¶ 6 will begin with the words "means for.") Accordingly, the applicant reserves the right to add additional claims after filing the application to pursue such additional claim forms for other aspects of the invention.

## Claims

1. A system, comprising:
an audio receiver agent configured to capture a baseline voice sample and a current voice sample of a subject;
a memory configured to store the baseline voice sample of the subject; and
a processor configured to:
determine a first energy level of the subject corresponding to the captured baseline voice sample and a second energy level of the subject corresponding to the captured current voice sample;
compare the second energy level to the first energy level; and
notify an entity if the second energy level is a predetermined amount below the first energy level.

2. The system of claim 1, wherein:
the audio receiver agent is configured to capture voice samples of the subject over the course of a time period;
the processor is configured to:
determine energy levels of the subject corresponding to each of the captured voice samples; and
plot the determined energy levels for the subject as a function of the time period.

3. The system of claim 2, wherein the processor is configured to display the plotted energy levels on a display for the subject and/or an administrator.

4. The system of claim 1, comprising a voice monitor, wherein:
the voice monitor comprises the memory and the processor; and
the audio receiver agent sends the baseline voice sample and the current voice sample to the voice monitor.

5. The system of claim 4, wherein the audio receiver agent sends the baseline voice sample and the current voice sample directly to the voice monitor without using a network.

6. The system of claim 4, wherein the audio receiver agent sends the baseline voice sample and the current voice sample directly to the voice monitor using a network.

7. The system of claim 4, wherein the audio receiver agent and the voice monitor are not part of the same device.

8. The system of claim 1, comprising a voice-enabled computer for directing the subject to warehouse locations, wherein the voice-enabled computer comprises the audio receiver agent.

9. The system of claim 1, wherein:
the audio receiver agent is an application on a phone of the subject; and
the subject is a patient.

10. A method, comprising:
receiving, with a computer, a baseline voice sample and a current voice sample of a subject;
storing, with the computer, the baseline voice sample of the subject in memory;
determining, with the computer, a first energy level of the subject corresponding to the captured baseline voice sample and a second energy level of the subject corresponding to the captured current voice sample;
comparing, with the computer, the second energy level to the first energy level; and
notifying, with the computer, an entity if the second energy level is a predetermined amount below the first energy level.

11. The method of claim 10, comprising:
receiving, with the computer, voice samples of the subject over the course of a time period;
determining, with the computer, energy levels of the subject corresponding to each of the captured voice samples; and
plotting, with the computer, the determined energy levels for the subject as a function of the time period.

12. The method of claim 10, comprising:
capturing the baseline voice sample and a current voice sample of the subject with a voice-enabled computer for directing the subject to warehouse locations; and
sending, with the voice-enabled computer, the baseline voice sample and the current voice sample of the subject to the computer.

13. The method of claim 10, comprising:
capturing the baseline voice sample and a current voice sample of the subject with an application on a phone of the subject, wherein the subject is a patient; and
sending, with the application, the baseline voice sample and the current voice sample of the subject to the computer.

14. The method of claim 10, comprising:
determining, with the computer, whether a target energy level has been maintained by the subject for a given time period;
if the subject has not maintained the target energy level for a given time period, determining, with the computer, if the second energy level is a predetermined amount below the first energy level; and
if the second energy level is a predetermined amount below the first energy level, notifying an administrator.

15. The method of claim 14, comprising if the subject has not maintained the target energy level for a given time period and the second energy level is a predetermined amount below the first energy level, instructing the subject to take a work break, assigning the subject to a different work task, and/or applying additional error checks to the subject's work.
